# FASCICULE DE BREVET EUROPEEN

(11) **EP 1 929 700 B1**
(45) Date de publication et mention de la délivrance du brevet: **18.07.2012**
(21) Numéro de dépôt: 06808269.2
(22) Date de dépôt: 31.08.2006
(51) Int. Cl.: H04L 12/12, H04L 12/10

(54) **Procede d'envoi de messages depuis un premier reseau vers un second reseau**
Verfahren zum Senden von Nachrichten von einem ersten Netz zu einem zweiten Netz
Method of sending messages from a first network to a second network

(30) Priorité: 31.08.2005 FR 0552647
(43) Date de publication de la demande: 11.06.2008
(73) Titulaire: FRANCE TELECOM, 75015 Paris (FR)
(72) Inventeur: BATTELLO, Fabien, 22140 Begard (FR); L'AZOU, Yves, F-22560 Trebeurden (FR)
(86) Numéro de dépôt international: PCT/FR2006/050829
(87) Numéro de publication internationale: WO 2007/026105

(56) Documents cités:
- WO-A-2004/040891
- PATENT ABSTRACTS OF JAPAN vol. 2003, no. 12, 5 décembre 2003 (2003-12-05) -& JP 2004 070393 A (FUJI ELECTRIC HOLDINGS CO LTD), 4 mars 2004 (2004-03-04)
- RICHARD W: "TCP/IP Illustrated: the protocols" 1994, ADDISON-WESLEY , USA , XP002383913 ISBN: 0-201-63346-9 page 238 - page 240
- MIKROTIK: 'MikroTik RouterOS V2.6 Reference Manual', [en ligne] 29 Novembre 2002, pages I - 418, XP007914332 Extrait de l'Internet: <URL:https://www.mikrotik.com/documentation /manual_2.6/ReferenceGuide.pdf> [extrait le 2010-08-09]
- PCMAG.COM ENCYCLOPEDIA: 'Definition of: hibernation mode', [en ligne] PCMAG.COM encyclopedia Extrait de l'Internet: <URL:www.pcmag.com> [extrait le 2011-02-01]

## Description

L'invention concerne un procédé d'envoi de messages depuis un premier réseau vers un second réseau géré par un opérateur de réseau, ledit premier réseau comprenant au moins un équipement d'infrastructure, au moins un terminal utilisateur raccordé audit équipement d'infrastructure et un onduleur raccordé à une source d'alimentation électrique, secourant électriquement au moins ledit équipement d'infrastructure.

L'invention se situe dans le domaine des télécommunications. Elle concerne plus précisément les réseaux locaux et l'alimentation en courant des équipements de ces réseaux.

Un onduleur domestique sert à protéger contre des variations ou coupures de courant électrique un ou plusieurs équipements électroniques. Il s'agit d'un boîtier placé en interface entre le réseau électrique et les terminaux à protéger. Pour des raisons de coût et de volume les onduleurs n'offrent qu'une faible autonomie et une fois qu'ils ont pris le relais en alimentant électriquement les terminaux, ils laissent au mieux le temps de terminer correctement les applications en cours d'exécution localement. Il est connu de transmettre de l'onduleur vers le terminal un signal qui signifie au terminal la fin proche de l'alimentation électrique (http://www.apcmedia.com/pdf_downloads/litpdfs/996-0920.pdf). Ce signal transite par le biais d'une interface spécifique qui est une interface série ou "USB" (de l'anglais "Universal Serial Bus") du terminal. Bien sûr, la transmission de ce signal est réservée aux terminaux qui disposent d'une interface pour le recevoir et d'un logiciel pour le traiter, par exemple en terminant les applications en cours d'exécution de façon propre. Le document JP 2004 070393 décrit une méthode permettant de transmettre d'un onduleur alimentant des équipements d'un réseau vers un des équipements un signal signifiant la fin proche de l'alimentation électrique, cet équipement relayant ensuite le signal vers d'autres équipements du réseau.

Le document « MikroTik RouterOS v2.6 Reference Manual » décrit un système d'exploitation pour un routeur fonctionnant sur un ordinateur personnel. Une fonction de supervision de la batterie permet de passer en mode hibernation lorsque le niveau de puissance de celle-ci passe en dessous d'un seuil.

Il est courant que le terminal fasse appel à un service offert par un fournisseur de service distant situé dans un réseau en s'appuyant sur un opérateur de réseau pour son propre raccordement audit réseau. Ainsi, l'opérateur de réseau fournit des ressources au terminal, comme par exemple de la connectivité internet et de la bande passante, afin que le terminal accède à un service, comme par exemple Internet, un service de voix sur IP, un service vidéo. Sur perte d'alimentation électrique, le terminal n'est plus alimenté par la source d'alimentation électrique mais par l'onduleur qui a pris le relais. L'onduleur arrivant au terme de son autonomie, le terminal n'étant pas averti, celui-ci perd subitement sa connectivité. Le document "TCP/IP Illustrated: the protocols", Richard W., 1994, Addison-Wesley, décrit un mode particulier de fonctionnement d'une connexion "TCP" (de l'anglais "Transmission Control Protocol") associée à une application entre un client et un serveur. Dans ce mode particulier de fonctionnement, une des entités participantes à la connexion peut demander de terminer la connexion TCP. Cependant, la fin de la connexion TCP, ne libère pas des ressources utilisées par des protocoles sur lesquels s'appuie la connexion TCP. Ainsi, on continue à consommer des ressources engagées par l'opérateur de réseau et par le fournisseur de service, par exemple une adresse IP, une session PPP (de l'anglais "Point to Point Protocol"), qui sont des ressources rares de l'opérateur. Ainsi, actuellement la détection de la perte de connectivité est laissée à l'initiative de l'opérateur de réseau. Elle est basée sur des mécanismes réseau propres à des protocoles mis en oeuvre par le réseau, comme par exemple des temporisations (ou "timeout" en anglais), ou des envois de messages pour vérifier qu'une session existe toujours (message "keepalive" en anglais). Dans tous les cas, la détection n'est pas immédiate. Ainsi, les ressources réseau ne sont pas libérées immédiatement. Dans le cas de services facturés à la durée, cela peut induire des difficultés de comptage. Des contextes d'utilisation de service ne sont pas sauvegardés ou ne le sont pas en temps voulu, ce qui peut être gênant dans le cas d'un service de fourniture d'un flux vidéo en temps réel à un terminal de type décodeur numérique dédié à la télévision (le terme couramment utilisé est le terme anglais "Set Top Box", ou "STB"), notamment si le flux, lors d'un rétablissement du service, n'est pas rétabli exactement à l'endroit où il a été interrompu. Enfin, dans le cas d'un service qui fait communiquer plusieurs pairs, ou terminaux et utilisateurs de ces terminaux, ceux-ci ne sont pas avertis. Un tel service est par exemple un service de téléphonie sur IP.

Le but de l'invention est de remédier aux inconvénients présentés ci-dessus. Le but est atteint avec un procédé selon l'invention tel que décrit dans la revendication 1.

Le procédé permet à des équipements d'un premier réseau qui prennent connaissance d'une fin imminente d'alimentation électrique et donc d'une perte de connectivité, de communiquer sur un second réseau auquel ils sont raccordés pour accéder à un ou des services d'un ou de plusieurs fournisseurs de service, des informations réseau et service utiles pour l'opérateur de réseau qui gère le second réseau, et pour le ou les fournisseurs de service qui fournissent le ou les services aux équipements du premier réseau.

Les avantages de ce procédé sont considérables puisque l'opérateur de réseau, alerté par le terminal utilisateur ou l'équipement d'infrastructure du premier réseau d'une perte de connectivité, peut libérer immédiatement et proprement des ressources réseau utilisées par le terminal utilisateur. Cela évite d'utiliser, pour cette libération de ressources, des mécanismes réseau basés sur des expirations de temporisations qui nuisent aux bonnes performances du réseau. Le procédé selon l'invention s'applique à des ressources gérées par l'opérateur de réseau ou/et le fournisseur de service et n'est pas limité à une libération de ressources utilisées par une application qui s'exécute sur un client ou un serveur.

En outre, le message de fin imminente d'alimentation électrique n'étant pas transmis au terminal utilisateur directement par l'onduleur, mais sur le premier réseau par l'équipement d'infrastructure, aucune interface ni matériel spécifiques ne sont nécessaires sur le terminal utilisateur pour gérer un tel message.

Avantageusement, le message de fin imminente d'alimentation électrique est transmis par diffusion sur toutes les interfaces du premier réseau dudit équipement d'infrastructure.

Ainsi, tous les terminaux utilisateur du premier réseau sont alertés de la fin imminente d'alimentation électrique.

Avantageusement le procédé selon l'invention comprend une étape d'envoi d'un message de service vers au moins un fournisseur de service qui fournit au moins un service audit terminal utilisateur.

Ce mode de réalisation présente un avantage. En effet, l'envoi par le terminal utilisateur d'un message à un fournisseur de service qui lui fournit un service pour lui signaler une fin d'utilisation de ce service permet au fournisseur de service de gérer convenablement l'utilisation de ce service. Par exemple, un contexte d'utilisation du service est sauvegardé ; il pourra être utilisé pour restaurer une session de service lors de la reprise de la connectivité internet. Dans le cas d'un service vidéo, par exemple un flux vidéo transmis à un décodeur numérique dédié à la télévision ou "Set Top Box", le flux pourra être renvoyé à partir du moment précis où il a été interrompu. La qualité du service perçue par l'utilisateur est ainsi améliorée. Dans le cas d'un service facturé à la durée, le fournisseur de service peut faire un comptage précis de l'utilisation du service. Ainsi, la gestion du service est améliorée.

Avantageusement, le procédé selon l'invention comprend une étape d'envoi d'un message utilisateur dudit terminal utilisateur vers un pair du second réseau avec lequel il communique.

Ce mode de réalisation présente l'avantage de permettre à des pairs et donc à des utilisateurs, en communication avec le terminal utilisateur dans le cadre d'un service, d'être prévenus de la déconnexion du terminal utilisateur. Ainsi, les pairs, prévenus, ne s'interrogent pas sur le fonctionnement de leur terminal ou de leur service.

L'invention concerne aussi un équipement d'infrastructure tel que decrit dans la revendication 5.

Avantageusement, l'équipement d'infrastructure est caractérisé en ce qu'il comprend une fonction onduleur.

Intégrer la fonction d'un onduleur dans un équipement est intéressant en termes d'encombrement et de branchement, ce qui prend tout son sens dans le cas par exemple d'un réseau local domestique.

Avantageusement, l'équipement d'infrastructure est caractérisé en ce qu'il comprend un module d'envoi d'un message de perte de connectivité vers un second réseau géré par un opérateur de réseau.

L'envoi d'un message de perte de connectivité vers le second réseau est intéressant dans le cas par exemple où les équipements utilisateurs du premier réseau ne sont pas équipés pour signaler eux-mêmes leur perte de connectivité au second réseau.

L'invention concerne aussi un programme d'ordinateur, tel que decrit dans la revendication 7.

L'invention concerne aussi un terminal utilisateur, comprend : tel que decrit dans la revendication 8.

Avantageusement, le terminal utilisateur selon l'invention est caractérisé en ce qu'il comporte un module d'envoi d'un message de service vers au moins un fournisseur de service qui lui fournit au moins un services.

Avantageusement, le terminal utilisateur selon l'invention est caractérisé en ce qu'il comporte un module d'envoi d'un message utilisateur vers au moins un pair du second réseau avec lequel il communique.

L'invention concerne aussi un programme d'ordinateur, tel que décrit dans la revendication 11.

L'invention concerne aussi un système tel que décrit dans la revendication 12.

De nombreux détails et avantages de l'invention seront mieux compris à la lecture de la description d'un mode particulier de réalisation en référence aux schémas annexés donnés à titre non limitatif et dans lesquels :
La figure 1 présente les étapes du procédé selon l'invention.
La figure 2 est un premier exemple de système qui met en oeuvre le procédé selon l'invention.
La figure 3 est un deuxième exemple de système qui met en oeuvre le procédé selon l'invention.
La figure 4 est un troisième exemple de système selon l'invention.
La figure 5 est une représentation fonctionnelle d'un modem selon l'invention.
La figure 6 est une représentation fonctionnelle d'un terminal utilisateur selon l'invention.

Un réseau comprend des équipements de différents types. Des équipements d'infrastructure sont des équipements qui assurent le fonctionnement de ce réseau. D'autres équipements raccordés au réseau comme par exemple des téléphones IP, des décodeurs numériques dédiés à la télévision (le terme couramment utilisé est le terme anglais "Set Top Box" ou "STB"), ou des ordinateurs personnels sont qualifiés de terminaux utilisateurs. Un premier réseau communique avec un second réseau via une interface constituée par exemple par un modem. Le second réseau est géré par un opérateur de réseau. Dans l'exemple décrit le premier réseau est un réseau local domestique et le second réseau est un réseau étendu.

Le modem permet de transmettre et recevoir des données principalement numériques entre un terminal et un réseau de communication. On parle actuellement de modems câble ou xDSL, le terme xDSL regroupant l'ensemble des variantes de la technologie DSL ("Digital Subscriber Line"), comme par exemple l'ADSL ("Asymmetric Digital Subscriber Line"), qui permet de transmettre des données haut débit sur des réseaux en cuivre. Des modems xDSL servent de passerelle internet pour des terminaux utilisateur aussi divers que des téléphones IP, des décodeurs numériques dédiés à la télévision, des ordinateurs ou des consoles de jeux. En général les modems disposent d'une prise de branchement au réseau électrique et de une ou plusieurs interfaces réseau, en général plusieurs interfaces réseau local (le terme couramment utilisé est le terme anglais "Local Area Network" ou LAN) et une interface réseau étendu (le terme couramment utilisé est le terme anglais "Wide Area Network" ou WAN).

Le modem est un équipement d'infrastructure. A l'intérieur du premier réseau une architecture plus ou moins complexe peut être définie. Ainsi, des routeurs peuvent être utilisés afin de définir des sous-réseaux et d'acheminer des communications à l'intérieur du premier réseau, des concentrateurs réseau (le terme anglais "hub" est quasiment systématiquement utilisé) qui dupliquent une information qu'ils reçoivent depuis un de leur ports vers tous leurs autres ports, ou des commutateurs (le terme couramment utilisé est le terme anglais "switch") qui envoient l'information reçue sur un de leur ports vers le port où se trouve connecté un terminal concerné par l'information peuvent être installés afin de connecter plusieurs équipements du premier réseau. Routeurs, concentrateurs et commutateurs sont également des équipements d'infrastructure. Le choix d'une architecture et des équipements d'infrastructure utilisés dans le premier réseau dépend des besoins que remplit le premier réseau.

Différentes configurations sont possibles pour un modem. Un modem peut être configuré en pont ou en routeur. On parle alors de modem-pont ou de modem-routeur. Ces différentes configurations offrent à l'opérateur de réseau une visibilité différente du premier réseau. La différence entre les deux est relative à l'affectation d'adresses IP. Avec un modem-pont, l'opérateur de réseau est responsable de l'adressage IP des équipements du premier réseau. L'opérateur a une visibilité sur tout le premier réseau puisqu'il voit tous les équipements de ce premier réseau. Ce type de configuration a tendance à être de plus en plus préconisé puisqu'il offre des avantages de configuration des équipements du premier réseau par l'opérateur de réseau, des facilités de maintenance pour l'opérateur de réseau qui peut mettre à jour à distance des versions de logiciels installés sur les équipements du premier réseau.

Un modem-routeur n'offre à l'opérateur de réseau qu'une visibilité très restreinte du réseau local domestique puisque seul le modem-routeur a une adresse IP visible de l'opérateur de réseau. C'est le modem-routeur qui affecte et gère les adresses IP des équipements du premier réseau. Le modem-routeur et le modem-pont sont bien sûr des équipements d'infrastructure.

En ce qui concerne l'alimentation électrique d'équipements du premier réseau et plus généralement d'équipements reliés à un réseau de communication, une norme, qui porte le nom de 802.3af a été entérinée par l'IEEE ("Institute of Electrical and Electronics Engineers"). Elle définit comment un courant électrique basse tension, la voix et des données peuvent être véhiculés via le même câble Ethernet.

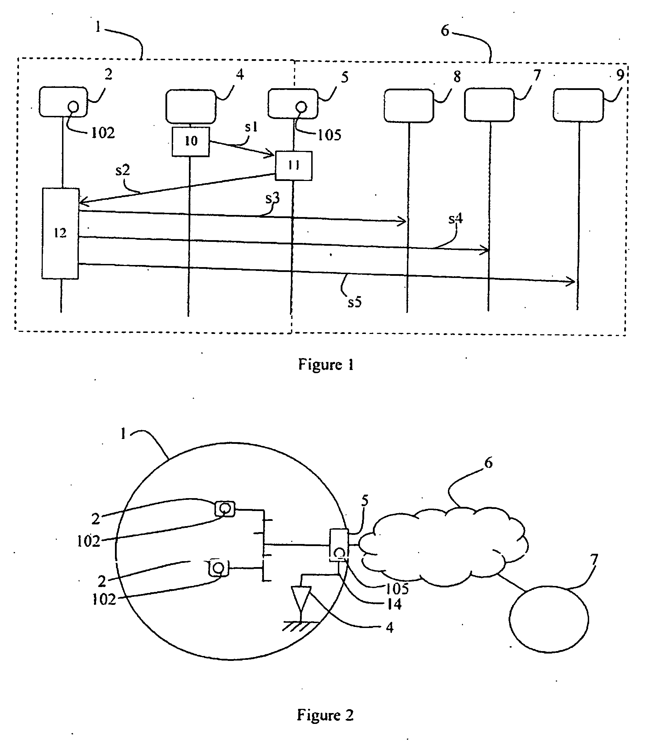

La figure 1 présente les étapes du procédé selon l'invention. Un premier réseau 1 est relié à un second réseau 6, via un modem 5. Le second réseau 6 est géré par un opérateur de réseau 8. Un onduleur 4 secourt électriquement le modem 5 qui est l'interface entre le premier réseau 1 et le second réseau 6. Dans l'exemple décrit le premier réseau est un réseau local domestique et le second est un réseau étendu géré par l'opérateur de réseau 8. Le modem 5, configuré en modem-pont est spécifique à la présente invention. Il comporte un module 105 de transmission de message de fin imminente d'alimentation électrique sur les interfaces du premier réseau après avoir été alerté d'une défaillance de la source d'alimentation électrique par l'onduleur 4. Avantageusement, le module 105 est constitué par un programme stocké dans une mémoire du modem 5. Un terminal utilisateur 2, spécifique à la présente invention est situé dans le premier réseau 1. Le terminal 2 peut être un ordinateur personnel, un décodeur numérique dédié à la télévision ou "Set Top Box", un téléphone IP, une imprimante, ou tout autre équipement équipé d'une prise réseau et connecté via cette prise réseau au premier réseau 1. Il comporte un module 102 d'envoi de messages vers le second réseau. Avantageusement, le module 102 est constitué par un programme stocké dans une mémoire du terminal utilisateur 2. Le second réseau 6 fournit au premier réseau 1 via l'interface constituée par le modem 5 des services réseau de base ou des services plus évolués selon que l'opérateur de réseau 8 prend en charge la configuration du premier réseau, ce qui est possible dans le cas d'une configuration du modem 5 en modem-pont. Un fournisseurs de service 7 fournit au terminal utilisateur 2 un ou plusieurs services auxquels a souscrit un utilisateur du terminal 2, non représenté sur la figure. Un service offert par le fournisseur de service est par exemple et de façon non exhaustive un service d'accès à Internet, un service de messagerie, d'hébergement de contenu, un service vidéo en mode flux continu, un service de téléphonie sur IP. Le fournisseur de service 7 est connecté au second réseau 6, le terminal utilisateur 2 accède à des services du fournisseur de service 7 à travers le second réseau 6. Le terminal utilisateur 2 dialogue avec un pair 9, représentant un utilisateur d'un terminal et le terminal associé dans le cadre d'un service auquel il a souscrit. Un exemple de service qui fait communiquer plusieurs pairs est un service de téléphonie sur IP. Sur la figure 1, un seul équipement de type terminal utilisateur, et un seul fournisseur de service sont représentés. L'invention ne se limite bien sûr pas à un seul terminal utilisateur et un seul fournisseur de service dans le premier réseau 1.

Dans une étape initiale 10, la source d'alimentation électrique étant défaillante, plus précisément, l'onduleur 4 détectant une perte d'alimentation électrique pendant plusieurs secondes consécutives, l'onduleur 4 prend le relais. Arrivant à la limite du terme de son autonomie et la source principale de courant électrique étant toujours défaillante, l'onduleur 4 alerte le modem 5 en transmettant un signal s1 signalant une perte imminente d'alimentation électrique au modem 5.

Dans une étape 11 consécutive à la réception du signal s1 de perte imminente d'alimentation électrique, le modem 5 transmet un message s2 de fin imminente d'alimentation électrique au terminal utilisateur 2. Le message s2 est transmis au niveau Ethernet. De façon alternative, il est transmis conformément au protocole 802.11 issu de l'IEEE (IEEE-802.11-1999, "Information technology - Telecommunications and Information Exchange between Systems - Local and Metropolitan Area Network - Specific Requirements - Part 11: Wireless LAN Medium Access Control (MAC) and Physical Layer (PHY) Specifications") dans de le cas où le terminal utilisateur 2 est raccordé au premier réseau par une connexion sans fil. Dans le cas où plusieurs terminaux utilisateurs sont présents et raccordés au premier réseau 1, le signal s2 est diffusé sur toutes les interfaces du premier réseau qu'il possède, à destination de tous les équipements raccordés audit premier réseau 1.

Dans une réalisation alternative de l'invention, le message s2 est transmis par le modem 5 au terminal utilisateur 2 selon un mode multicast : le terminal utilisateur 2 reçoit le message s2 s'il est abonné au flux multicast correspondant au message s2. Ainsi, seuls des terminaux utilisateur abonnés à ce flux et donc capables de le traiter reçoivent le message s2 de fin imminente d'alimentation électrique.

Dans une étape 12, consécutive à la réception du message s2 de fin imminente d'alimentation électrique, l'équipement utilisateur 2 envoie un message s3 d'annonce de perte de connectivité vers le second réseau 6 à l'opérateur de réseau 8, à travers le modem 5.

Dans une réalisation alternative de l'invention, le message s3 est envoyé par le modem 5. Ce mode de réalisation peut être utilisé par exemple dans le cas où les terminaux utilisateurs ne sont pas équipés du module 102 spécifique à l'invention. Ce mode de réalisation peut également être utilisé dans le cas d'une configuration du modem 5 en modem-routeur.

Dans une réalisation avantageuse de l'invention, le terminal utilisateur 2 qui est en train d'exécuter un service offert par le fournisseur de service 7 envoie un message s4 de service propre au service en cours d'exécution au fournisseur de service 7 pour lui signaler une fin d'utilisation de ce service.

Dans une réalisation alternative de l'invention, le message s4 est envoyé par le modem 5. Ce mode de réalisation peut être utilisé par exemple dans le cas où les terminaux utilisateurs ne sont pas équipés du module 102 spécifique à l'invention. Ce mode de réalisation peut également être utilisé dans le cas d'une configuration du modem 5 en modem-routeur.

Par exemple, et de façon non exhaustive, dans le cas d'un décodeur numérique dédié à la télévision ou "Set Top Box" qui a obtenu une adresse IP par un serveur DHCP ("Dynamic Host Configuration Protocol"), protocole d'allocation d'adresses IP défini à l'IETF par la RFC 2131, et qui reçoit un flux en mode de diffusion continu (le terme couramment utilisé est le terme anglais "streaming") d'un fournisseur de service Vidéo selon le protocole RTSP ("Real Time Streaming Protocol") défini à l'IETF par le RFC 2326, la "Set Top Box" après réception du message s2, envoie le message s4 qui est un message RTSP pour stopper la diffusion en mode continu et un message s3 qui est un message DHCP de relâchement d'adresse IP (le nom courant du message est "release") vers l'opérateur de réseau 8. Les messages échangés ne se limitent pas à ces exemples et dépendent des protocoles utilisés pour dialoguer avec l'opérateur de réseau et le fournisseur de service. Un autre exemple de type de message adressé à l'opérateur de réseau est un message conforme au protocole PPP ("Point-to-Point Potocol"), défini à l'IETF par la RFC 1665, utilisé lors de l'attachement d'un terminal utilisateur au réseau. De même, le message s4 envoyé au fournisseur de service dépend du service offert et du protocole sous-jacent, des exemples de protocoles étant SNMP ("Simple Network Management Protocol"), H323 et SIP ("Session Initiation Protocol"). Les protocoles H323 et SIP sont par exemple utilisés dans des services de téléphonie sur IP.

De façon avantageuse, et dans le cas où d'autres pairs sont en communication avec le terminal utilisateur 2 dans le cadre d'une utilisation d'un service offert par un fournisseur de service, le terminal utilisateur 2 émet un signal s5 utilisateur à destination des autres pairs pour leur signaler sa fin de participation à la communication en cours. Un tel service est par exemple un service de téléphonie sur IP pendant lequel plusieurs pairs discutent en temps réel.

Le module 102 est implémenté dans le terminal lors d'une première installation et éventuellement mis à jour lors d'une opération manuelle de maintenance sur le terminal utilisateur 2. Dans une réalisation alternative de l'invention, la fonction est reprogrammable ou reconfigurable à distance grâce par exemple à une interface OSGI ("Open Service Gateway Initiative", http://www.osgi.org) qui permet le déploiement dynamique d'applications sans interruption du premier réseau, par exemple sans interruption du modem 5 qui joue le rôle de passerelle entre deux réseaux. Ainsi, en fonction de souhaits de l'opérateur de réseau ou d'un fournisseur de service qui a fait évoluer un service, les messages s3, s4 et s5 émis par le terminal utilisateur 2 consécutivement à la réception d'un message s2 de fin imminente d'alimentation électrique peuvent évoluer en fonction d'évolution de service ou de nouvelles contraintes réseau en intégrant, par exemple de nouveaux paramètres.

Dans une réalisation avantageuse de l'invention, un événement de mise hors tension du terminal utilisateur 2 provoquée par action de l'interrupteur marche/arrêt place le terminal utilisateur 2 dans l'étape .12 du procédé à condition que l'événement déclenche le module 102 préalablement à l'arrêt électrique. Ainsi, avant l'arrêt électrique du terminal, au moins le message s3 est envoyé à destination de l'opérateur de réseau.

La figure 2 présente un système qui met en oeuvre le procédé selon l'invention.

Dans ce mode de réalisation, le modem 5 utilise le protocole 802.3af pour alimenter électriquement les équipements du premier réseau 1. L'onduleur 4 est relié au modem 5 par un lien électrique 14. Le signal s1 de perte imminente d'alimentation électrique selon la figure 2 est véhiculé par un canal de signalisation qui relie l'onduleur au modem 5. Ce canal de signalisation est par exemple porté par le lien électrique 14. Dans une réalisation alternative de l'invention non représentée, le canal de signalisation est porté par un lien série entre l'onduleur 4 et le modem 5. Dans ce cas, deux liens physiques relient l'onduleur au modem.

Dans une réalisation alternative de l'invention non représentée, le modem 5 intègre la fonction onduleur, le modem 5 et l'onduleur 4 ne formant plus qu'un seul équipement d'infrastructure.

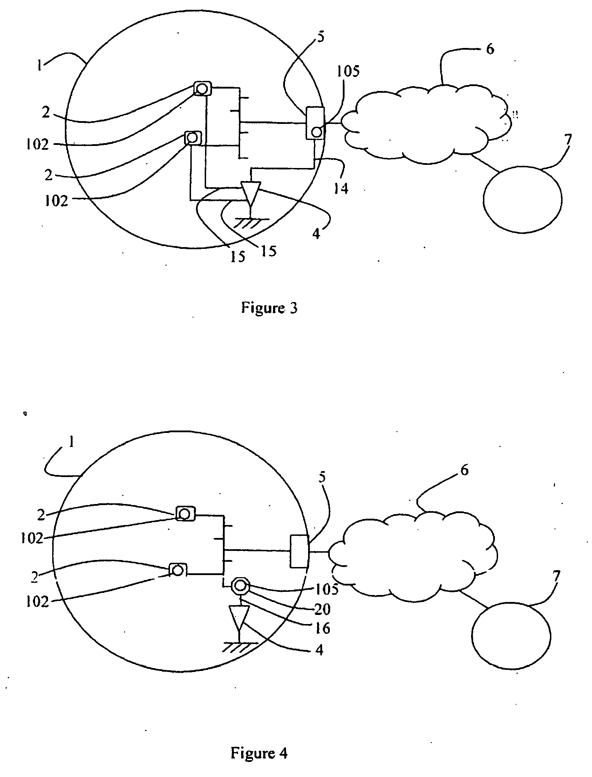

La figure 3 présente un système qui met en oeuvre le procédé de l'invention selon un deuxième mode de réalisation. Dans ce mode de réalisation, les terminaux utilisateur 2 sont alimentés électriquement par le secteur et l'onduleur 4 secourt électriquement tous les équipements du premier réseau 1, terminaux utilisateur et équipements d'infrastructure, ce qui est illustré par des liens électriques 14 et 15 qui relient l'onduleur 4, respectivement au modem 5 et aux terminaux utilisateur 2.

La figure 4 illustre un système qui met en oeuvre le procédé de l'invention selon un troisième mode de réalisation.

Dans ce système, le premier réseau 1 comprend en plus du premier équipement d'infrastructure qui est le modem 5, un second équipement d'infrastructure qui est un commutateur 20. Le commutateur 20 est secouru électriquement par l'onduleur 4 qui lui est raccordé. Dans ce système, le commutateur 20 utilise le protocole 802.3af pour alimenter électriquement les équipements du premier réseau 1, que ce soit les terminaux utilisateur 2 ou le modem 5. Le signal s1 de perte imminente d'alimentation électrique selon la figure 2 est véhiculé par un canal de signalisation qui relie l'onduleur au commutateur 20. Ce canal de signalisation est par exemple porté par un lien électrique 16. Dans une réalisation alternative de l'invention non représentée, le canal de signalisation est porté par un lien série entre l'onduleur et le commutateur. Dans ce cas, deux liens physiques relient l'onduleur au commutateur.

Dans une réalisation alternative de l'invention non représentée, le commutateur 20 intègre la fonction onduleur, l'onduleur 4 et le commutateur 20 ne formant plus qu'un seul équipement d'infrastructure.

On l'aura compris, le module 105 selon l'invention peut être installé sur différents équipements d'infrastructure du premier réseau capables de diffuser sur plusieurs interfaces du premier réseau un message de perte imminente d'alimentation électrique. Dans une réalisation avantageuse de l'invention d'autres équipements d'infrastructure peuvent implémenter l'invention : des concentrateurs, des routeurs installés dans le premier réseau. Les équipements en question peuvent intégrer la fonction onduleur ou être reliés à l'onduleur par une liaison électrique ou série.

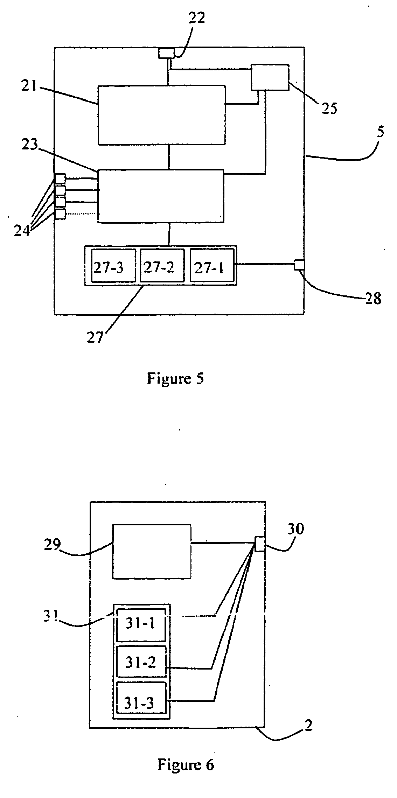

La figure 5 est une représentation fonctionnelle schématique d'un modem 5 selon l'invention. Le modem 5 est configuré en modem-pont et comprend la fonction onduleur.

Le modem 5 comprend des modules fonctionnels. Il comprend également des interfaces externes qui lui permettent de communiquer avec des équipements du premier réseau ; ce sont des interfaces de type réseau local, et avec le second réseau ; ce sont des interfaces de type réseau étendu. Il comprend aussi des interfaces internes qui permettent aux modules de communiquer.

Un module 21 de modulation/démodulation remplit la fonction principale d'un modem. Ce module convertit des données numériques en données analogiques. Il est interface avec le second réseau par une première interface externe 22.

Un module 23 de gestion des interfaces est en charge de la gestion des interfaces externes et de la transmission de messages qui arrivent sur une interface externe vers une autre interface externe. De secondes interfaces externes 24 sont les interfaces avec le premier réseau. Dans le cas d'un modem configuré en modem-routeur, ce module assure également une fonction de routage.

Un module 25 d'administration accessible via la première interface externe 22 gère les modules du modem 5. Il communique avec les modules via des interfaces internes.

Un module 27, propre à l'invention, comprend des sous-modules fonctionnels.

Un sous-module 27-1 assure les fonctions d'onduleur. Il est prévu pour alerter un sous-module 27-2 sur défaillance de la source principale d'alimentation électrique. Une interface électrique 28 lui permet d'être alimenté en courant électrique.

Un sous-module 27-3 est prévu pour construire et transmettre un message de fin imminente d'alimentation électrique sur les interfaces du premier réseau. Pour cela il communique avec le module 23 de gestion des interfaces qui transmet le message. Les sous-modules 27-1, 27-2, 27-3 communiquent via des interfaces internes non représentées.

Dans le cas d'une configuration en modem-routeur, des modules fonctionnels pourraient être ajoutés, par exemple et de façon non exhaustive, un module fonctionnel de filtrage, un module fonctionnel de translation d'adresses.

Dans une réalisation alternative de l'invention non représentée, des sous-modules d'envoi de message s3 de perte de connectivité vers le second réseau selon la figure 1 et d'envoi de message s4 de service vers un fournisseur de service selon la figure 1 sont ajoutés.

La figure 6 est une représentation fonctionnelle d'un terminal utilisateur 2 selon l'invention. Le terminal utilisateur 2 représenté est un décodeur numérique dédié à la télévision ou "Set Top Box" qui comprend plusieurs modules fonctionnels. Il comprend également une interface réseau 30 qui lui permet de communiquer avec le réseau et des interfaces internes qui permettent à des modules du terminal utilisateur 2 de communiquer.

Un module fonctionnel 29 remplit la fonction principale de décodage numérique. Le flux vidéo est reçu via l'interface réseau 30.

Un module fonctionnel 31, propre à l'invention comprend des sous-modules fonctionnels.

Un module 31-1 est prévu pour recevoir un message de fin imminente d'alimentation électrique via l'interface réseau 30. Sur réception de ce message, un sous-module 31-2 prépare et envoie un message de perte de connectivité à travers l'interface réseau 30 au second réseau, à l'attention de l'opérateur de réseau.

Un sous-module 31-3 est prévu pour préparer et envoyer un message de service à un fournisseur de service qui lui fournit un service vidéo.

## Revendications

1. Procédé d'envoi de messages depuis un premier réseau (1), ledit premier réseau comprenant au moins un équipement d'infrastructure (5), l'équipement d'infrastructure étant apte à fournir une interface entre le premier réseau et un second réseau (6) géré par un opérateur de réseau (8), au moins un terminal utilisateur (2) raccordé audit équipement d'infrastructure et un onduleur (4) raccordé à une source d'alimentation électrique, secourant électriquement au moins ledit équipement d'infrastructure, le procédé comprenant :
- une étape (10) d'alerte dudit équipement d'infrastructure par ledit onduleur sur défaillance de la source d'alimentation électrique,
**caractérisé en ce que** le procédé comprend en outre :
- une étape (11) de transmission d'un message (s2) de fin imminente d'alimentation électrique par ledit équipement d'infrastructure à destination dudit terminal utilisateur,
- une étape (12) d'envoi d'un message (s3) de perte de connectivité d'un équipement appartenant au groupe comprenant l'équipement d'infrastructure et ledit au moins un terminal utilisateur, ledit message étant envoyé vers le second réseau à l'attention de l'opérateur de réseau.

2. Procédé selon la revendication 1, dans lequel le message de fin imminente d'alimentation électrique est transmis par diffusion sur toutes les interfaces du premier réseau dudit équipement d'infrastructure.

3. Procédé selon l'une des revendications précédentes, comprenant en outre une étape d'envoi d'un message (s4) de service vers au moins un fournisseur de service qui fournit au moins un service audit terminal utilisateur.

4. Procédé selon l'une quelconque des revendications 1 ou 2 comprenant en outre une étape d'envoi d'un message (s5) utilisateur dudit terminal utilisateur vers un pair du second réseau avec lequel il communique.

5. Equipement d'infrastructure (5) destiné à être installé dans un premier réseau (1), ledit équipement étant agencé pour fournir une interface entre le premier réseau et un second réseau géré par un opérateur de réseau (8) et secouru électriquement par un onduleur (4) raccordé à une source d'alimentation électrique et comprenant :
- un module de réception (27-2) d'un signal d'alerte émis par l'onduleur suite à une défaillance de la source d'alimentation électrique,
**caractérisé en ce que** ledit équipement d'infrastructure comprend en outre :
- un module de transmission (27-3) d'un message de fin imminente d'alimentation électrique sur au moins une interface du premier réseau,
- un module d'envoi d'un message de perte de connectivité dudit équipement d'infrastructure, envoyé vers le second réseau à l'attention de l'opérateur de réseau.

6. Equipement d'infrastructure selon la revendication 5, **caractérisé en ce qu'**il comprend une fonction onduleur (27-1).

7. Programme d'ordinateur, comprenant des instructions pour recevoir un signal d'alerte émis par un onduleur suite à une défaillance d'une source d'alimentation électrique, **caractérisé en ce qu'**il comprend en outre des instructions pour transmettre un message de fin imminente d'alimentation électrique sur au moins une interface d'un premier réseau et des instructions pour envoyer un message de perte de connectivité relatif à une adresse dans un réseau géré par un opérateur de réseau affectée par ledit opérateur de réseau à un équipement d'infrastructure, envoyé vers le réseau à l'attention de l'opérateur de réseau.

8. Terminal utilisateur (2) destiné à être utilisé dans un premier réseau (1), comprenant un module (30-1) de réception d'un message de fin imminente d'alimentation électrique en provenance d'un équipement d'infrastructure du premier réseau,
**caractérisé en ce qu'**il comprend en outre un module (30-2) d'envoi d'un message de perte de connectivité dudit terminal utilisateur relatif à une adresse dans un second réseau géré par un opérateur de réseau affectée par ledit opérateur de réseau audit terminal utilisateur, ledit message étant envoyé vers le second réseau à l'attention de l'opérateur de réseau.

9. Terminal utilisateur selon la revendication 8, comprenant en outre un module (30-3) d'envoi d'un message de service vers au moins un fournisseur de service qui lui fournit au moins un service.

10. Terminal utilisateur selon la revendication 8, comprenant en outre un module d'envoi d'un message utilisateur (s5) vers au moins un pair du second réseau avec lequel il communique.

11. Programme d'ordinateur, comprenant des instructions pour recevoir un message de fin imminente d'alimentation électrique en provenance d'un équipement d'infrastructure d'un premier réseau, **caractérisé en ce qu'**il comprend des instructions pour envoyer un message de perte de connectivité d'un terminal relatif à une adresse dans un second réseau géré par un opérateur de réseau affectée par ledit opérateur, ledit message étant envoyé vers le second réseau à l'attention de l'opérateur de réseau.

12. Système comprenant :
- au moins un équipement d'infrastructure destiné à être installé dans un premier réseau (1), agencé pour fournir une interface entre le premier réseau et un second réseau, le second réseau (6) étant géré par un opérateur de réseau (8),
l'équipement d'infrastructure étant secouru électriquement par un onduleur (4) raccordé à une source d'alimentation électrique et comprenant :
- un module de réception (27-2) d'un signal d'alerte émis par l'onduleur suite à une défaillance de la source d'alimentation électrique
- un module de transmission (27-3) d'un message de fin imminente d'alimentation électrique sur au moins une interface du premier réseau,
- au moins un terminal utilisateur selon la revendication 8.

## Claims

1. Method for sending messages frozen a first network (1), said first network comprising at least one item of infrastructure equipment (5), the item of infrastructure equipment being capable of providing an interface between the first network and a second network (6) managed by a network operator (8), at least one user terminal (2) connected to said item of infrastructure equipment and one inverter (4) connected to an electrical power supply source, electrically protecting at least said item of infrastructure equipment, the method comprising:
- a step (10) of a warning being given to said item of infrastructure equipment by said inverter on failure of the electrical power supply source,
**characterized in that** the method also comprises:
- a step (11) of a message (s2) of imminent end of electrical power supply being transmitted by said item of infrastructure equipment to said user terminal,
- a step (12) of sending a message (s3) of loss of connectivity of an item of equipment belonging to the unit comprising the item of infrastructure equipment and said at least one user terminal, said message being sent to the second network for the attention of the network operator.

2. Method according to Claim 1, in which the message of imminent end of electrical power supply is transmitted by broadcast over all the interfaces of the first network of said item of infrastructure equipment.

3. Method according to one of the preceding claims, also comprising a step of sending a service message (s4) to at least one service provider cho providers at least one service to said user terminal.

4. Method according to either one of Claim 1 and 2, also comprising a step of sending a user message (s5) frog said user terminal to a peer of the second network with which it communicates.

5. Item of infrastructure equipment (5) designed to be installed in a first network (1), said item of equipment being arranged to provide an interface between the first network and a second network managed by a network operator (8) and electrically protected by an inverter (4) connected to an electrical power supply source and comprising:
- a module (27-2) for receiving a warning signal transmitted by the inverter following a failure of the electrical power supply source,
**characterized in that** said item of infrastructure equipment also comprises:
- a module (27-3) for transmitting a message of imminent end of electrical power supply over at least one interface of the first network,
- a module for sending a message of loss of connectivity of said item of infrastructure equipment, sent to the second network for the attention of the network operator.

6. Item of infrastructure equipment according to Claim 5, **characterized in that** it comprises an inverter function (27-1).

7. Computer program, comprising instructions for receiving a warning signal transmitted by an inverter following a failure of an electrical power supply source, **characterized in that** it also comprises instructions for transmitting a message of imminent end of electrical power supply over at least one interface of a first network and instructions for sending a message of loss of connectivity relating to an address in a network managed by a network operator, said address being assigned by said network operator to an item of infrastructure equipment, said message being sent to the network for the attention of the network operator.

8. User terminal (2) designed to be used in a first network (1), comprising a module (30-1) for receiving a message of imminent end of electrical power supply from an item of infrastructure equipment of the first network,
characterized ain that it also comprises a module (30-2) for sending a message of loss of connectivity of said user terminal relating to an address in a network managed by a network operator, said address being assigned by said network operator to said user terminal, said message being sent to the second network for the attention of the network operator.

9. User terminal according to Claim 8, also comprising a module (30-3) for sending a service message to at least one service provider which provides it with at least one service.

10. User terminal according to Claim 8, also comprising a module for sending a user message (s5) to at least one peer of the second network with which it communicates.

11. Computer program, comprising instructions for receiving a message of imminent end of electrical power supply from an item of infrastructure equipment of a first network, **characterized in that** it comprise instructions for sending a message of loss of connectivity of a terminal relating to an address in a second network managed by a network operator, said address being assigned by said network operator, said message being sent to the second network for the attention of the network operator.

12. System comprising:
- at least one item of infrastructure equipment designed to be installed in a first network (1), arranged to provide an interface between the first network and a second network, the second network (6) being managed by a network operator (8),
the item of infrastructure equipment being electrically protected by an inverter (4) connected to an electrical power supply source and comprising:
- a module (27-2) for receiving a warning signal transmitted by the inverter following a failure of the electrical power supply source,
- a module (27-3) for transmitting a message of imminent end of electrical power supply over at least one interface of the first network,
- at least one user terminal according to Claim 8guy

## Patentansprüche

1. Verfahren zum Senden von Mitteilungen von einem ersten Netz (1), wobei das erste Netz mindestens eine Infrastruktureinrichtung (5), wobei die Infrastruktureinrichtung eine Schnittstelle zwischen dem ersten Netz und einem von einem Netzbetreiber (8) verwalteten zweiten Netz (6) liefern kann, mindestens ein an die Infrastruktureinrichtung angeschlossenes Benutzer-Endgerät (2) und einen an eine Stromquelle angeschlossenen Wechselrichter (4) enthält, der mindestens die Infrastruktureinrichtung elektrisch unterstützt, wobei das Verfahren enthält:
- einen Schritt (10) der Warnung der Infrastruktureinrichtung durch den Wechselrichter bei Ausfall der Stromquelle, **dadurch gekennzeichnet, dass** das Verfahren außerdem enthält:
- einen Schritt (11) der Übertragung einer Mitteilung (s2) durch die Infrastruktureinrichtung an das Benutzer-Endgerät über das unmittelbar bevorstehende Ende der Stromversorgung,
- einen Schritt (12) des Sendens einer Mitteilung (s3) über den Verbindungsverlust einer Einrichtung, die zu der die Infrastruktureinrichtung und das mindestens eine Benutzer-Endgerät enthaltenden Gruppe gehört, wobei die Mitteilung an das zweite Netz an den Netzbetreiber gerichtet gesendet wird.

2. Verfahren nach Anspruch 1, bei dem die Mitteilung über das unmittelbar bevorstehende Ende der Stromversorgung durch Übermittlung an alle Schnittstellen des ersten Netzes der Infrastruktureinrichtung übertragen wird.

3. Verfahren nach einem der vorhergehenden Ansprüche, das außerdem einen Schritt des Sendens einer Dienst-Mitteilung (s4) an mindestens einen Dienstanbieter enthält, der mindestens einen Dienst an das Benutzer-Endgerät liefert.

4. Verfahren nach einem der Ansprüche 1 oder 2, das außerdem einen Schritt des Sendens einer Benutzer-Mitteilung (s5) vom Benutzer-Endgerät an einen Peer des zweiten Netzes enthält, mit dem es in Verbindung steht.

5. Infrastruktureinrichtung (5), die dazu bestimmt ist, in einem ersten Netz (1) installiert zu werden, wobei die Einrichtung eingerichtet ist, um eine Schnittstelle zwischen dem ersten Netz und einem von einem Netzbetreiber (8) verwalteten zweiten Netz zu liefern, und elektrisch von einem an eine Stromquelle angeschlossenen Wechselrichter (4) unterstützt wird und enthält:
- ein Empfangsmodul (27-2) eines Warnsignals, das vom Wechselrichter nach einem Ausfall der Stromquelle gesendet wird,
**dadurch gekennzeichnet, dass** die Infrastruktureinrichtung außerdem enthält:
- ein Übertragungsmodul (27-3) einer Mitteilung über das unmittelbar bevorstehende Ende der Stromversorgung an mindestens einer Schnittstelle des ersten Netzes,
- ein Sendemodul einer Mitteilung über einen Verbindungsverlust der Infrastruktureinrichtung, die an das zweite Netz an den Netzbetreiber gerichtet gesendet wird.

6. Infrastruktureinrichtung nach Anspruch 5, **dadurch gekennzeichnet, dass** sie eine Wechselrichterfunktion (27-1) enthält.

7. Computerprogramm, das Anweisungen enthält, um ein Warnsignal zu empfangen, das von einem Wechselrichter nach einem Ausfall einer Stromquelle gesendet wird, **dadurch gekennzeichnet, dass** es außerdem Anweisungen, um eine Mitteilung über das unmittelbar bevorstehende Ende einer Stromversorgung an mindestens einer Schnittstelle eines ersten Netzes zu übertragen, und Anweisungen enthält, um eine Mitteilung über einen Verbindungsverlust bezüglich einer Adresse in einem von einem Netzbetreiber betriebenen Netz, die vom Netzbetreiber einer Infrastruktureinrichtung zugeteilt wird, zu senden, die an das Netz an den Netzbetreiber gerichtet gesendet wird.

8. Benutzer-Endgerät (2), das dazu bestimmt ist, in einem ersten Netz (1) verwendet zu werden, das ein Modul (30-1) zum Empfang einer Mitteilung über das unmittelbar bevorstehende Ende einer Stromversorgung enthält, die von einer Infrastruktureinrichtung des ersten Netzes kommt, **dadurch gekennzeichnet, dass** es außerdem ein Modul (30-2) zum Senden einer Mitteilung über einen Verbindungsverlust des Benutzer-Endgeräts bezüglich einer Adresse in einem von einem Netzbetreiber betriebenen zweiten Netz enthält, die vom Netzbetreiber dem Benutzer-Endgerät zugeteilt wird, wobei die Mitteilung an das zweite Netz an den Netzbetreiber gerichtet gesendet wird.

9. Benutzer-Endgerät nach Anspruch 8, das außerdem ein Modul (30-3) zum Senden einer Dienst-Mitteilung an mindestens einen Dienstanbieter enthält, der ihm mindestens einen Dienst liefert.

10. Benutzer-Endgerät nach Anspruch 8, das außerdem ein Modul zum Senden einer Benutzer-Mitteilung (s5) an mindestens einen Peer des zweiten Netzes enthält, mit dem es in Verbindung steht.

11. Computerprogramm, das Anweisungen enthält, um eine Mitteilung über das unmittelbar bevorstehende Ende einer Stromversorgung zu empfangen, die von einer Infrastruktureinrichtung eines ersten Netzes komme, **dadurch gekennzeichnet, dass** es Anweisungen enthält, um eine Mitteilung über den Verbindungsverlust eines Endgeräts bezüglich einer Adresse in einem von einem Netzbetreiber betriebenen zweiten Netz zu senden, die vom Netzbetreiber zugeteilt wird, wobei die Mitteilung an das zweite Netz an den Netzbetreiber gerichtet gesendet wird.

12. System, das enthält:
- mindestens eine Infrastruktureinrichtung, die dazu bestimmt ist, in einem ersten Netz (1) installiert zu werden, die eingerichtet ist, um eine Schnittstelle zwischen dem ersten Netz und einem zweiten Netz zu liefern, wobei das zweite Netz (6) von einem Netzbetreiber (8) verwalten wird,
wobei die Infrastruktureinrichtung elektrisch von einem an eine Stromquelle angeschlossenen Wechselrichter (4) unterstützt wird und enthält:
- ein Empfangsmodul (27-2) eines Warnsignals, das vom Wechselrichter nach einem Ausfall der Stromquelle gesendet wird,
- sein Übertragungsmodul (27-3) einer Mitteilung über das unmittelbar bevorstehende Ende der Stromversorgung an mindestens einer Schnittstelle erstes Netzes,
- mindestens ein Benutzer-Endgerät nach Anspruch 8.
